# EUROPEAN PATENT SPECIFICATION

(11) **EP 4 510 162 B1**
(45) Date of publication and mention of the grant of the patent: **04.03.2026**
(21) Application number: 24191303.7
(22) Date of filing: 26.07.2024
(51) Int. Cl.: H01H 9/02, G05B 15/02, H01H 9/16, H02G 3/14

(54) **MODULAR CONTROL ASSEMBLY FOR HOME AUTOMATION SYSTEM**
MODULARE STEUERVORRICHTUNG FÜR HAUSAUTOMATISIERUNGSSYSTEM
ENSEMBLE DE CONTRÔLE MODULAIRE POUR SYSTÈME DOMOTIQUE

(30) Priority: 29.05.2023 IT 202300010869
(43) Date of publication of application: 19.02.2025
(73) Proprietor: Vimar S.p.A., 36063 Marostica (VI) (IT)
(72) Inventor: TURCATO, Marco, 36060 Romano d'Ezzelino (VI) (IT); MANERA, Riccardo, 36027 Rosà (VI) (IT)
(74) Representative: Locas, Davide

(56) References cited:
- WO-A1-2021/137130
- US-A- 4 401 864

## Description

The present invention relates to a modular control assembly for a home automation system.

The invention finds particular, though not exclusive, application in the technical field pertaining to home automation.

Home automation systems generally comprise a plurality of electronic devices such as switches, actuators, detectors or controllers, configured to communicate with each other via a shared communication channel. An example of a home automation system is described in international patent application WO 2021/147130.

The Applicant has noted that current home automation systems require a relatively complex installation of different components.

Consequently, in many cases the installation or even modification of a home automation system is particularly time consuming even for a specialised technician in order to achieve correct installation and configuration of the different devices used and the overall system.

The Applicant has therefore understood the need to offer relatively simple installation systems in terms of configuration and/or subsequent system modifications.

The Applicant has also noted that several electronic devices may be installed in the same wall-mounted support and may need to exchange information with each other via a data transmission element. The support is typically small.

The Applicant therefore understood the need to keep the footprint of the data transmission element, and of the system structure in general, relatively small.

The Applicant also perceived the need to improve the reliability of control devices for known home automation systems without impairing their user-friendliness or significantly affecting costs. In particular, this need may be perceived both in terms of robustness and in terms of safety for the user or installer,

The problem underlying the present invention is that of making available a home automation system that is structurally and functionally conceived to at least partially obviate one or more of the drawbacks referred to with reference to the mentioned prior art.

In the context of this problem, one purpose of the present invention is to provide a modular control assembly for a home automation system that is simplified in terms of installation.

A further object of the present invention is to provide a modular control assembly for a home automation system comprising a plurality of electronic units and modules configured to communicate data with each other, wherein the addition of a new electronic module to the system and/or the removal and/or replacement of one or more units or modules can be performed in a particularly simple manner.

A further object of the present invention is to provide a modular control assembly for a particularly space-saving home automation system.

A further object of the present invention is to provide a modular control assembly for a home automation system comprising a plurality of electronic modules with a relatively low implementation cost.

This problem is solved and at least one of these objects is at least partially achieved by the invention by means of a modular control assembly for a home automation system comprising one or more of the features mentioned in the appended claims.

In the present disclosure as well as in the herein enclosed claims, certain terms and expressions are deemed to have, unless otherwise expressly indicated, the meaning expressed in the following definitions.

The term "home automation system" refers to any type of electronic installation aimed at conferring at least a certain degree of automation and intelligence to electrical equipment in a domestic environment. By way of non-limiting example, such electrical equipment may include lighting, heating, control, motorised devices, sound, alarm and fire prevention equipment.

Such equipment, devices and installations, will generally be referred to in the context of the present invention as "electrical utility or electronic utility". In a first aspect thereof, the present invention is directed to a modular control assembly for a home automation system.

The modular assembly comprises a support frame that can be attached to a wall and/or an installation box.

The assembly comprises at least one actuation unit configured to receive an actuation signal of an electrical utility or electronic utility from a connection bus of the home automation system, and to switch said electrical utility or electronic utility between at least a first status and a second status. The assembly comprises at least one control module, including an actuation button, which can be operated in such a way as to generate an actuation signal.

The assembly comprises a power supply unit configured in such a way as to supply said actuation unit.

Said support frame comprises conductor means.

Said conductor means comprise a plurality of contacts.

The contacts are configured to supply said control module.

The contacts are configured to transmit said actuation signal to said actuation unit.

Said modular control assembly comprises first connection means configured to removably connect said control module to said support frame in a respective first seat defined in said support frame.

Said first connection means are configured to connect respective terminals of said control module to one or more of said contacts.

The modular control assembly comprises second connection means configured in such a way that said actuation unit and/or said power supply unit is removably connected in a respective second seat defined in said support frame.

Said modular control assembly comprises a plurality of second seats each configured to accommodate a respective actuation unit or power supply unit.

Said second connection means are configured to connect respective terminals of said actuation unit and/or respective terminals of said power supply unit to one or more of said contacts.

It will be appreciated that the modular assembly according to the present invention allows for a particularly versatile configuration of a home automation system, easily adapting to the control and actuation of different electrical utilities in an electrical installation, such as a home installation.

The support frame separates the units that communicate with the home automation system bus, from the control module that is operated by the user.

In this way, the functionalities of the modular assembly can be combined according to specific requirements.

At the same time, the safety of the modular assembly as well as its reliability can be improved.

The use of the support frame, to which the control module and the power supply and drive units can be attached, allows for a particularly compact solution, optimising the overall dimensions of the structure and making it particularly suitable for wall installation.

The present invention may also have at least one of the further characteristics set forth hereinafter.

Preferably, said power supply unit is configured in such a way as to receive and send a characteristic status signal from an operating condition of said electrical utility, said conductor means being configured in such a way as to transmit said status signal to said control module.

In this way, the half-conductors make it possible to realise a bus for the management of the home automation system, in a solution integrated into the support frame itself.

According to the invention, said support frame has a flat shape and defines opposing main faces, said control module being connected at a first face of said main faces, said actuation unit and said power supply unit being connected at a second face of said main faces, opposite to said first face.

This feature makes the frame easy to install on the wall, exploiting the installation boxes to house the power supply and drive units.

Preferably said second seat(s) is/are realised by means of a projecting frame defined in said second face. Preferably said projecting frame is formed integrally with said support frame, e.g. by moulding.

Preferably said conductor means are in the form of a flat strip, where said contacts extend between said first face and said second face.

Preferably, said conductor means are defined by a circuit.

Thanks to these features, the power supply and signal transmission can be realised in a compact manner and easily integrated into the support frame. Preferably said actuation unit comprises auxiliary buttons configured in such a way as to provide said actuation signal in the absence of said control module.

In this way, the home automation system can be easily tested during installation, without the need to complete the assembly of control modules to operate the utilities and complete the configuration.

Preferably said second face is configured in such a way as to cover said actuation unit and said power supply unit, said first second comprising through openings configured in such a way as to make said auxiliary buttons accessible through said faces.

In this way, the risk of inadvertently operating the auxiliary buttons can be advantageously reduced.

Preferably said support frame comprises a movable element configured in such a way as to cover said conductors at said second seat in a first operating position and leave said conductors accessible in a second operating position.

The movable element advantageously prevents the contacts from accidentally coming into contact with live wires, if the relevant supply or drive units are not present.

Preferably said support frame comprises a plurality of second seats each configured to accommodate a respective unit selected from said actuation unit and said power supply unit. Said support frame preferably comprises a plurality of movable elements each configured to cover a respective seat of said plurality of second seats.

This feature also contributes to the modularity of the modular assembly, allowing the number of drive units in the assembly to be adapted to specific installation requirements.

Preferably said movable element is slidable at said second face.

This allows the movable element to be easily moved between the two positions, resulting in a flat solution that is particularly suitable for wall installation.

According to the invention said control module comprises a fixing base on which said actuation button is supported in a tilting manner.

Said control module comprises at least one micro-switch, said micro-switch being operable by oscillation of said actuation button with respect to said fixing base.

Thanks to these features, the user can easily control different utilities, with a particularly robust, economical and reliable solution.

Preferably, said control module comprises a plurality of luminous elements programmable in such a way as to display information relating to said electrical utility and/or to the operating condition of said electrical utility.

This feature also makes the unit particularly adaptable to specific needs, making information easily available to the user.

Preferably, said first connection means and/or said connection second means comprise elastic elements that can be snapped into respective seats, allowing for a reliable, robust and at the same time economical connection. Preferably said seat(s) are formed by a projecting frame defined in said second face.

Preferably said support frame is essentially rectangular in shape.

In this way, the support frame can advantageously be combined with a conventional installation box, in which the power supply and drive units can be housed. The frame also protects the area where contact is made between the units and the conductor means.

Preferably, said support frame defines long sides and short sides, said control modules having an elongated shape and extending over a length substantially equal to one of the short sides of the support frame.

In this way, optimum use can be made of the extension of the support frame to create a rocker switch with sufficient oscillation amplitude to operate the micro-switch.

The characteristics and advantages of the present invention will best result from the detailed description of preferred embodiments thereof, illustrated by way of non-limiting example with reference to the accompanying drawings, in which:
- Figure 1 is an exploded perspective view of the modular control assembly according to the present invention,

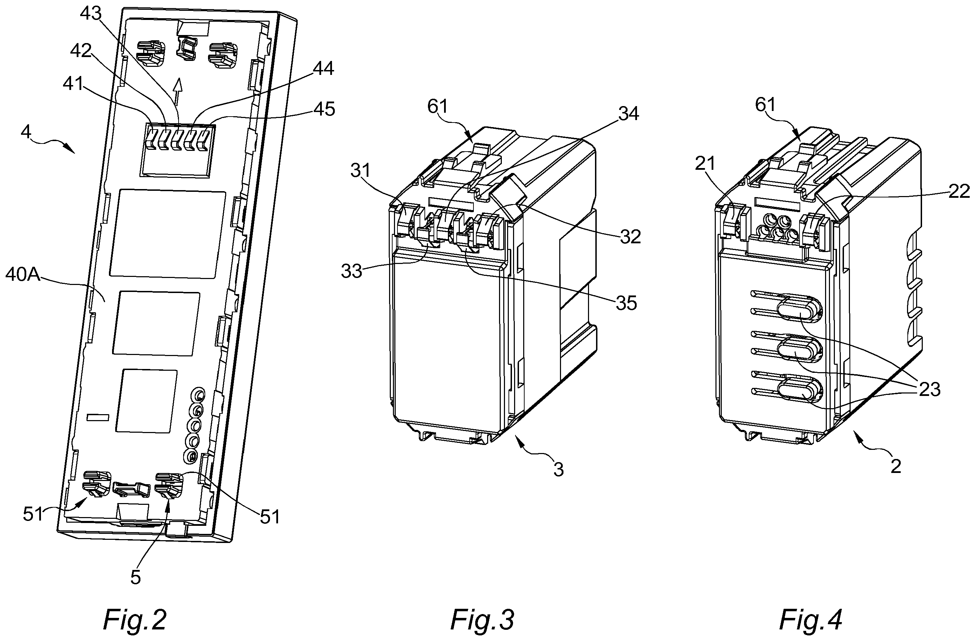

- Figures 2 to 4 are perspective views illustrating a control module, a supply unit and an actuation unit, respectively, details of the modular control assembly in Figure 1,
- Figure 5 is a perspective view of a support frame to which a power supply unit and two drive units are connected at a rear face,
- Figures 6A and 6B are a front and a rear perspective view, respectively, of the support frame in Figure 5, without the connected units,
- Figures 7A and 7B are a front perspective view and a perspective view from the rear, respectively, of conductor means, a detail of the frame in Figures 6A and 6B,
- Figures 8A and 8B are two perspective views illustrating movable elements arranged respectively to cover the conductor means and in a position to leave them available.

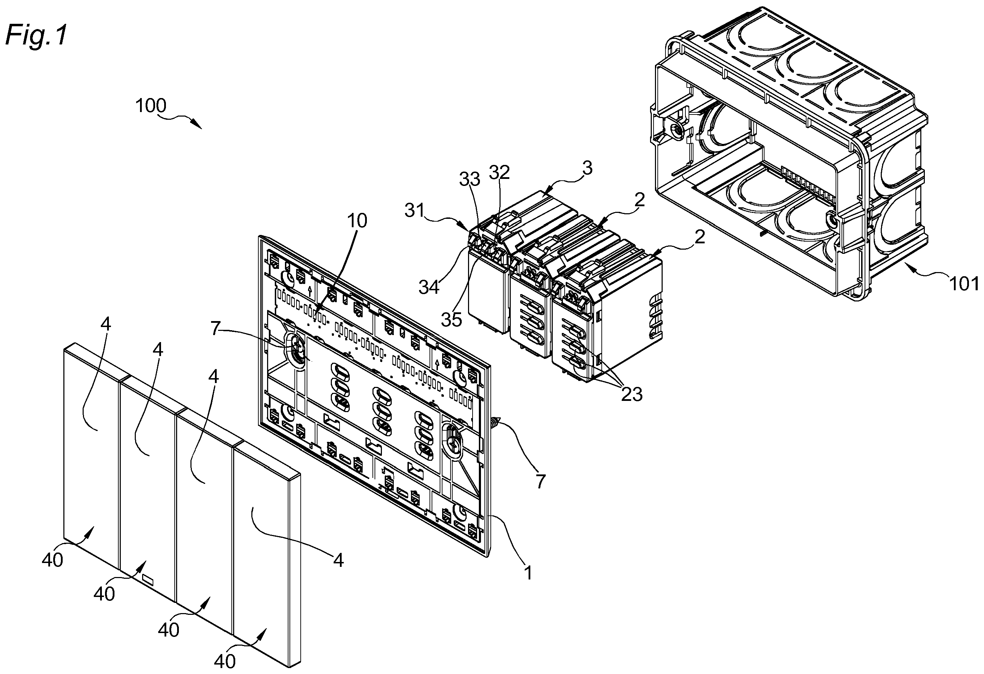

Referring initially to Figure 1, a modular control assembly for a home automation system is referred to overall by the reference number 100.

As will be further illustrated below, the assembly 100 of the present invention is intended to control and command the home automation system, thereby enabling operation by a user of one or more components in the home automation system.

In other words, the user, acting through the assembly 100, will be able to interact with the home automation system, controlling the equipment or devices included in it.

For example, the modular control assembly 100 can be used to switch a lighting point on or off by closing or opening an electrical contact for supplying a light bulb, or to control relays for activating electric motors, e.g. for operating roller shutters, or to send a control signal to a heating system. As mentioned earlier, the equipment/devices/systems controlled via the modular control assembly 100 will be generically referred to as electrical or electronic utilities.

The assembly 100 is advantageously of the wall-installable type and, for this purpose, comprises a support frame 1, preferably provided with attachment means 7 for its attachment to a built-in installation box 101.

Such attachment means 7 may, for example, comprise a pair of screws intended to engage in respective seats made in the box 101.

However, it will be appreciated that different attachment systems can be provided and the frame can be configured not only for wall mounting but also, more generically, to any installation box, e.g. intended to be placed on a table to control lights or other equipment from that position.

In some preferred embodiments, the support frame 1 has a flat shape, with a substantially rectangular extension, and defines main faces 1A, 1B opposing each other.

A first face 1A is intended, in use, to face outwards from the wall on which the assembly 100 of the present invention is mounted.

A second face 1B is instead intended to face the wall and, in particular, will face an internal volume of said installation box 101.

At said first face 1A, the assembly 100 has first connection means 5 configured to removably connect a control module 4 to the support frame 1 in a respective first seat 16.

As will be explained in more detail below, the control modules 4 are configured in such a way as to allow a user to command or control an electrical or electronic utility in the home automation system.

For this purpose, in some embodiments the control modules 4 can have a respective actuation button 40, which can be operated in such a way as to generate an actuation signal that is sent via a communication bus of the home automation system to the respective user.

For example, the user can, by acting on the actuation button 40, switch a light bulb on or off, rather than acting on the other components of the home automation system, as previously mentioned.

In the example shown in the figure, the assembly 100 comprises four separate control modules 4, each possibly controlling a respective user.

As can be seen, the control modules 4 preferably have an elongated shape and extend parallel to the short sides of the rectangle defined by the frame, essentially along their entire length.

The assembly formed by the four control modules therefore allows the entire face 1A of the frame 1 to be covered.

In preferred embodiments, the control modules 4 comprise a respective fixing base 40A on which the actuation button 40 is supported in a tilting manner.

The user can therefore operate the actuation button 40 with one finger by swinging a micro-switch, not shown in the figure, on the fixing base 40A.

The micro-switch in turn will send an actuation signal to the utilities, as described in more detail below.

More generally, the control module 4 is of the electromechanical type.

In some embodiments, the use of an electronic control module, e.g. fitted with a contact or proximity sensor, can also be envisaged, possibly combined with electromechanical modules.

In order to allow recognition of the type of actuation realised by the control module 4, and make visible the zones at which the user must act to switch the button 40, the control module 4 may comprise a plurality of luminous elements, not shown in the figure.

Advantageously, the luminous elements, e.g. formed by LEDs, can be programmable in such a way as to display information relating to said electric or electronic utility and/or the operating condition of said electric or electronic utility.

For example, the LEDs could form a luminous icon in the shape of an upwards or downwards arrow in the case of shutter actuation, or luminous zones identifying the position at which to act to switch a light point on or off.

In order to enable the transmission of the actuation signal, and possibly a characteristic status signal from a user operating condition, the assembly 100 additionally comprises at least one actuation unit 2 and one power supply unit 3.

The actuation unit 2 is configured in such a way that it receives an actuation signal of the utility from the connection bus of the home automation system, and switches, as a function of the signal received, the electrical or electronic utility between at least a first status and a second status.

For this purpose, the actuation unit 2 can comprise, in preferred embodiments, one or more relays and include respective terminals for the electrical connection of the signal generated by the relay to the respective utilities.

However, the actuation signal can also be transmitted via the communication bus of the home automation system to remote actuation units, i.e. located in other areas of the electrical system, or to specific relays that are also remotely located.

For this purpose, the actuation unit can comprise respective terminals 21, 22 for the communication bus connection and ground connection respectively.

The power supply unit 3, on the other hand, is responsible for supplying the actuation unit 2 with a bus connection signal and ground, as well as for receiving and transmitting data for the management of the home automation system, e.g. data configured to define a status signal characteristic of the operating condition of the electrical or electronic utility controlled by the assembly 100.

The power supply unit 3 can also comprise respective terminals 31, 32, 33, 34, 35. These terminals preferably include a terminal for connection to the communication bus 31, through which the connection signal to the aforementioned bus is exchanged, one for ground connection 32, one for the power supply 33 of the control modules 4. Preferred embodiments also include a pair of terminals 34, 35, for receiving and transmitting data from the home automation communication bus to the control modules 4.

In fact, it should be noted that the control modules 4 use the power supply unit 3 to communicate with the bus of the home automation system.

The power supply unit 3 is also equipped with respective terminals configured to connect it to the communication bus of the home automation system, i.e. to enable communication with the other components thereof.

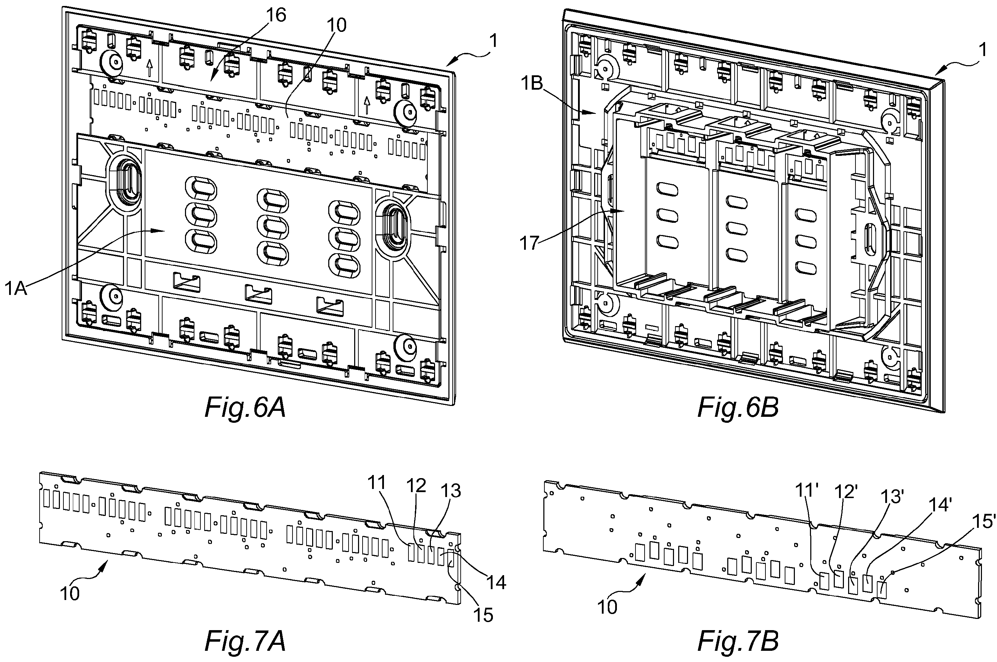

As can best be seen in the example of Figures 6A-6B and 7A-7B, the support frame 1 also comprises conductor means 10 comprising a plurality of contacts 11, 12, 13, 14, 15 configured to supply the control module and to transmit the actuation signal.

The conductor means 10 advantageously enable the connection of the terminals in the actuation unit 2 and power supply unit 3 to the respective terminals 41, 42, 43, 44, 45 in said control module 4.

The terminals in the control module 4 advantageously correspond to the terminals of the power supply and actuation unit.

There will therefore be a terminal 41 for supplying power to the control unit 4, a terminal for ground connection 42 and a pair of terminals 43, 44 for receiving and transmitting data to the home automation communication bus via the power supply unit 3.

Optionally, a common terminal 45 can also be provided to enable direct communication between the different control modules 4 mounted on the support frame 1. The latter terminal makes it possible, for example, to simultaneously illuminate all the control modules 4 when specific operating situations occur.

The conductor means 10 advantageously comprise electrified tracks configured in such a way as to connect all terminals of the same type. Such electrified tracks, and more generally said conductor means 10, can be advantageously defined by a printed circuit.

For example, in this way, each control module 4 will be able to communicate with the units in assembly 100, as well as in the home automation system as a whole, enabling the sending and receiving of signals required for the operation of the home automation system.

It will be appreciated that the first conductor means 5 are also configured in such a way that, when the control modules 4 are connected in their respective locations, the terminals 41, 42, 43, 44, 45 of the control module 4 are connected to the respective contacts 11, 12, 13, 14, 15 of the conductor means 10 on the first face 1A.

Advantageously, the actuation unit 2 and the power supply unit 3 are connected at the second face 1B of the support frame 1, i.e. the opposite face to the first face 1A.

For this purpose, second connection means 6 can be provided which are configured in such a way that the actuation unit 2 and the power supply unit 3 are removably connected in a respective second seat 17 defined in the support frame 1.

Also in this case, the connection means 6 advantageously allow the respective terminals 21, 22 of said actuation unit 2 and respective terminals 31, 32, 33, 34, 35 of said power supply unit 3 to be connected to the corresponding contacts 11', 12', 13', 14', 15'.

As can best be seen from Figures 7A and 7B, the conductor means 10 are preferably in the form of a flat strip, which is supported on the structure of the support frame in such a way that the contacts extend between the first face 1A and the second face 1B.

Preferably, at the second face 1B the support frame 1 comprises a plurality of second seats 17 each configured to accommodate either an actuation unit 2 or a power supply unit 3, which will therefore be provided with the same connection means 6.

As illustrated in Figure 6B, the seats 17 can be realised by means of a projecting frame 17A defined in the second face 1B.

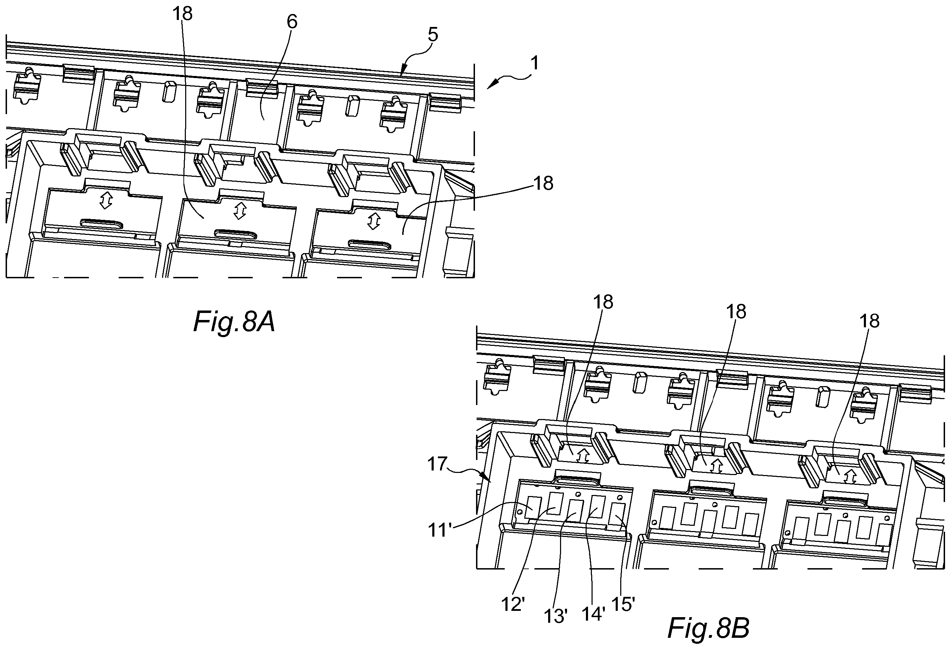

Referring now to Figures 8A and 8B, in some embodiments, the frame 1 comprises a series of movable elements 18 configured in such a way as to cover said conductors 11', 12', 13', 14', 15' at said second seat 17 in a first operating position and leave said conductors 11', 12', 13', 14', 15' accessible in a second operating position.

Preferably said movable element 18 is slidable at said second face 1B.

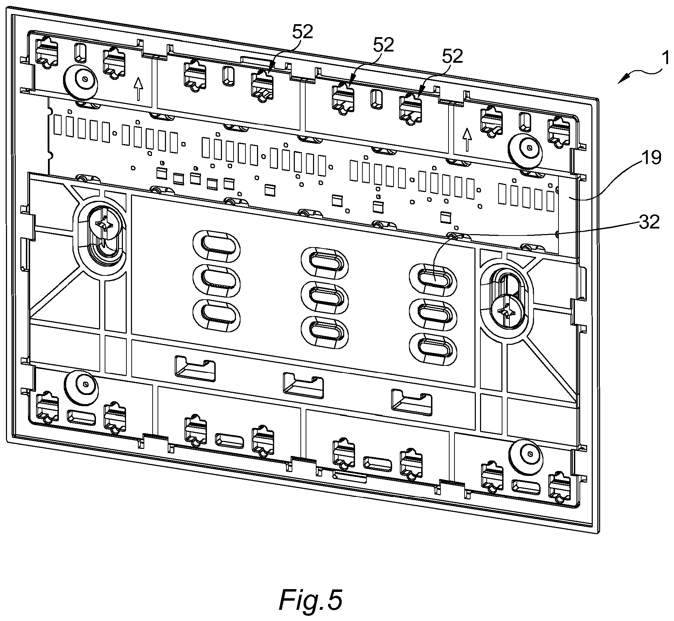

Referring now to figure 5, in some embodiments the actuation unit may comprise auxiliary buttons 23 configured in such a way as to provide the actuation signal in the absence of the control module 4.

On the second face 1B through openings 19 are formed, configured in such a way as to make said auxiliary buttons 23 accessible through said faces.

In this way, the auxiliary buttons 23 can be reached by an installer and the home automation system can be controlled even in the absence of the control modules, e.g. during an installation phase of the home automation system.

## Claims

1. Modular control assembly (100) for home automation system comprising:
a support frame (1) fixable to a wall and/or to an installation box (101);
at least one actuation unit (2) configured in such a way as to provide an actuation signal of an electrical utility to a connection bus of the home automation system, in such a way as to switch said electrical utility between at least a first status and a second status;
a power supply unit (3) configured in such a way as to power said actuation unit (2);
at least one control module (4) comprising an actuation button (40), operable in such a way as to generate an actuation signal;
wherein said support frame (1) comprises conductor means (10) comprising a plurality of contacts (11, 12, 13, 14, 15) configured to power said control module (4) and to transmit said actuation signal to said actuation unit (2), said support frame (1) having a flat shape and defining opposing main faces (1A, 1B), wherein said control module (4) is removably connected at a first face (1A) of said main faces, said actuation unit (2) and said power supply unit (3) being removably connected at a second face (1B) of said main faces, opposite to said first face (1A);
said modular control assembly (100) further comprising first connection means (5) and second connection means (6), said first connection means (5) configured to removably connect said control module to said support frame (1) in a respective first seat (16) defined in said support frame (1) and to connect respective terminals (41) of said control module (4) to one or more of said contacts (11, 12, 13, 14, 15), and said second connection means (6) are configured in such a way as to removably connect said actuation unit (2) and/or said power supply unit (3) in a respective second seat (17) defined in said support frame (1) and to connect respective terminals (21) of said actuation unit (2) and/or respective terminals (31) of said power supply unit (3) to one or more of said contacts (11', 12', 13', 14', 15'), **characterized in that** said control module (4) comprises a fixing base (40A) on which said actuation button (40) is supported in a tilting manner, said control module (4) comprising at least one micro-switch operable by oscillation of said actuation button (40) with respect to said fixing base (40A).

2. Modular control assembly (100) according to claim 1, wherein said second seat(s) (17) is/are realised by means of a projecting frame (17A) defined in said second face (1B).

3. Modular control assembly (100) according to claim 2, wherein said conductor means (10) are in the form of a flat strip, wherein said contacts extend between said first face (1A) and said second face (1B).

4. Modular control assembly (100) according to the preceding claim, wherein said conductor means (10) are defined by a printed circuit.

5. Modular control assembly (100) according to any one of the preceding claims, wherein said actuation unit (2) comprises auxiliary buttons (23) configured in such a way as to provide said actuation signal in the absence of said control module (4).

6. Modular control assembly (100) according to the preceding claim, wherein said second face (1B) is configured in such a way as to cover said actuation unit (2) and said power supply unit (3), said second face (1B) comprising through openings (19) configured in such a way as to make said auxiliary buttons (23) accessible through said faces.

7. Modular control assembly (100) according to any one of the preceding claims, wherein said support frame (1) comprises a movable element (18) configured in such a way as to cover said conductors (11', 12', 13', 14', 15') at said second seat (17) in a first operating position and leave said conductors (11', 12', 13', 14', 15') accessible in a second operating position.

8. Modular control assembly (100) according to the preceding claim, wherein said support frame (1) comprises a plurality of second seats (17) each configured in such a way as to house a respective unit selected between said actuation unit (2) and said power supply unit (3), said support frame (1) comprising a plurality of movable elements (18) each configured in such a way as to cover the conductors (11', 12', 13', 14', 15') of a respective seat of said plurality of second seats (17).

9. Modular control assembly (100) according to claim 7 or 8, wherein said movable element (18) is slidable at said second face (1B).

10. Modular control assembly (100) according to any one of the preceding claims, wherein said control module (4) comprises a plurality of luminous elements programmable in such a way as to display information relating to said electrical utility and/or to the operating condition of said electrical utility.

11. Modular control assembly (100) according to any one of the preceding claims, wherein said first connection means (5) and/or said second connection means (6) comprise elastic elements (51, 61) that can be snap-fitted into respective housings (52, 62).

12. Modular control assembly (100) according to any one of the preceding claims, wherein said one or more seats are formed by a projecting frame defined in said first face (1A).

## Patentansprüche

1. Modulare Steueranordnung (100) für ein Hausautomatisierungssystem, umfassend:
einen Stützrahmen (1), der an einer Wand und/oder an einer Installationsbox (101) befestigt werden kann; mindestens eine Betätigungseinheit (2), die so konfiguriert ist, dass sie ein Betätigungssignal eines elektrischen Versorgungsgeräts an einen Verbindungsbus des Hausautomatisierungssystems liefert, um das elektrische Versorgungsgerät zwischen mindestens einem ersten Zustand und einem zweiten Zustand umzuschalten; eine Stromversorgungseinheit (3), die so konfiguriert ist, dass sie die Betätigungseinheit (2) mit Strom versorgt;
mindestens ein Steuermodul (4), das einen Betätigungsknopf (40) umfasst, der so betätigt werden kann, dass er ein Betätigungssignal erzeugt;
wobei der Stützrahmen (1) Leitermittel (10) umfasst, die eine Vielzahl von Kontakten (11, 12, 13, 14, 15) umfassen, die so konfiguriert sind, dass sie das Steuermodul (4) mit Strom versorgen und das Betätigungssignal an die Betätigungseinheit (2) übertragen, wobei der Stützrahmen (1) eine flache Form aufweist und gegenüberliegende Hauptflächen (1A, 18) definiert, wobei das Steuermodul (4) an einer ersten Fläche (1A) der Hauptflächen abnehmbar verbunden ist, wobei die Betätigungseinheit (2) und die Stromversorgungseinheit (3) an einer zweiten Fläche (18) der Hauptflächen gegenüber der ersten Fläche (1A) abnehmbar verbunden sind;
wobei die modulare Steueranordnung (100) ferner erste Verbindungsmittel (5) und zweite Verbindungsmittel (6) umfasst, wobei die ersten Verbindungsmittel (5) so konfiguriert sind, dass sie das Steuermodul in einem jeweiligen ersten Sitz (16), der in dem Stützrahmen (1) definiert ist, abnehmbar mit dem Stützrahmen (1) verbinden und jeweilige Anschlüsse (41) des Steuermoduls (4) mit einem oder mehreren der Kontakte (11, 12, 13, 14, 15) verbinden, und die zweiten Verbindungsmittel (6) so konfiguriert sind, dass sie die Betätigungseinheit (2) und/oder die Stromversorgungseinheit (3) in einem jeweiligen zweiten Sitz (17), der in dem Stützrahmen (1) definiert ist, abnehmbar verbinden und jeweilige Anschlüsse (21) der Betätigungseinheit (2) und/oder jeweilige Anschlüsse (31) der Stromversorgungseinheit (3) mit einem oder mehreren der Kontakte (11', 12', 13', 14', 15') verbinden, **dadurch gekennzeichnet, dass** das Steuermodul (4) eine Befestigungsbasis (40A) umfasst, auf der der Betätigungsknopf (40) kippbar gestützt wird, wobei das Steuermodul (4) mindestens einen Mikroschalter umfasst, der durch Schwingen des Betätigungsknopfs (40) in Bezug auf die Befestigungsbasis (40A) betätigt werden kann.

2. Modulare Steueranordnung (100) nach Anspruch 1, wobei der/die zweite(n) Sitz(e) (17) mittels eines vorstehenden Rahmens (17A) realisiert wird/werden, der in der zweiten Fläche (18) definiert ist.

3. Modulare Steueranordnung (100) nach Anspruch 2, wobei die Leitermittel (10) die Form eines flachen Streifens aufweisen, wobei sich die Kontakte zwischen der ersten Fläche (1A) und der zweiten Fläche (18) erstrecken.

4. Modulare Steueranordnung (100) nach dem vorhergehenden Anspruch, wobei die Leitermittel (10) durch eine gedruckte Schaltung definiert sind.

5. Modulare Steueranordnung (100) nach einem der vorhergehenden Ansprüche, wobei die Betätigungseinheit (2) Hilfsknöpfe (23) umfasst, die so konfiguriert sind, dass sie das Betätigungssignal in Abwesenheit des Steuermoduls (4) bereitstellen.

6. Modulare Steueranordnung (100) nach dem vorhergehenden Anspruch, wobei die zweite Fläche (18) so konfiguriert ist, dass sie die Betätigungseinheit (2) und die Stromversorgungseinheit (3) abdeckt, wobei die zweite Fläche (18) Durchgangsöffnungen (19) umfasst, die so konfiguriert sind, dass sie die Hilfsknöpfe (23) durch die Flächen zugänglich machen.

7. Modulare Steueranordnung (100) nach einem der vorhergehenden Ansprüche, wobei der Stützrahmen (1) ein bewegliches Element (18) umfasst, das so konfiguriert ist, dass es die Leiter (11', 12', 13', 14', 15') an dem zweiten Sitz (17) in einer ersten Betriebsposition abdeckt und die Leiter (11', 12', 13', 14', 15') in einer zweiten Betriebsposition zugänglich lässt.

8. Modulare Steueranordnung (100) nach dem vorhergehenden Anspruch, wobei der Stützrahmen (1) eine Vielzahl von zweiten Sitzen (17) umfasst, die jeweils so konfiguriert sind, dass sie eine jeweilige Einheit aufnehmen, die zwischen der Betätigungseinheit (2) und der Stromversorgungseinheit (3) ausgewählt ist, wobei der Stützrahmen (1) eine Vielzahl von beweglichen Elementen (18) umfasst, die jeweils so konfiguriert sind, dass sie die Leiter (11', 12', 13', 14', 15') eines jeweiligen Sitzes der Vielzahl von zweiten Sitzen (17) abdecken.

9. Modulare Steueranordnung (100) nach Anspruch 7 oder 8, wobei das bewegliche Element (18) an der zweiten Fläche (18) verschiebbar ist.

10. Modulare Steueranordnung (100) nach einem der vorhergehenden Ansprüche, wobei das Steuermodul (4) eine Vielzahl von Leuchtelementen umfasst, die so programmierbar sind, dass sie Informationen in Bezug auf die Stromversorgung und/oder den Betriebszustand der Stromversorgung anzeigen.

11. Modulare Steueranordnung (100) nach einem der vorhergehenden Ansprüche, wobei die ersten Verbindungsmittel (5) und/oder die zweiten Verbindungsmittel (6) elastische Elemente (51, 61) umfassen, die in jeweilige Gehäuse (52, 62) eingeschnappt werden können.

12. Modulare Steueranordnung (100) nach einem der vorhergehenden Ansprüche, wobei der eine oder die mehreren Sitze durch einen vorstehenden Rahmen gebildet werden, der in der ersten Fläche (1A) definiert ist.

## Revendications

1. Ensemble de commande modulaire (100) pour système domotique comprenant :
un cadre de support (1) pouvant être fixé à un mur et/ou à une boîte d'installation (101) ;
au moins une unité d'actionnement (2) configurée de manière à fournir un signal d'actionnement d'une charge électrique à un bus de connexion du système domotique, de manière à faire commuter ladite charge électrique entre au moins un premier état et un second état ;
une unité d'alimentation électrique (3) configurée de manière à alimenter ladite unité d'actionnement (2) ;
au moins un module de commande (4) comprenant un bouton d'actionnement (40), actionnable de manière à générer un signal d'actionnement ;
dans lequel ledit cadre de support (1) comprend des moyens conducteurs (10) comprenant une pluralité de contacts (11, 12, 13, 14, 15) configurés pour alimenter ledit module de commande (4) et pour transmettre ledit signal d'actionnement à ladite unité d'actionnement (2), ledit cadre de support (1) ayant une forme plate et définissant des faces principales opposées (1A, 1B), dans lequel ledit module de commande (4) est connecté de manière amovible à une première face (1A) desdites faces principales, ladite unité d'actionnement (2) et ladite unité d'alimentation électrique (3) étant connectées de manière amovible à une seconde face (1B) desdites faces principales, opposée à ladite première face (1A) ;
ledit ensemble de commande modulaire (100) comprenant en outre des premiers moyens de connexion (5) et des seconds moyens de connexion (6), lesdits premiers moyens de connexion (5) étant configurés pour connecter de manière amovible ledit module de commande audit cadre de support (1) dans un premier siège (16) respectif défini dans ledit cadre de support (1) et pour connecter les bornes (41) respectives dudit module de commande (4) à l'un ou plusieurs desdits contacts (11, 12, 13, 14, 15), et lesdits seconds moyens de connexion (6) sont configurés de manière à connecter de manière amovible ladite unité d'actionnement (2) et/ou ladite unité d'alimentation électrique (3) dans un second siège (17) respectif défini dans ledit cadre de support (1) et à connecter les bornes (21) respectives de ladite unité d'actionnement (2) et/ou les bornes (31) respectives de ladite unité d'alimentation électrique (3) à un ou plusieurs desdits contacts (11', 12', 13', 14', 15'), **caractérisé en ce que** ledit module de commande (4) comprend une base de fixation (40A) sur laquelle ledit bouton d'actionnement (40) est supporté de manière basculante, ledit module de commande (4) comprenant au moins un micro-interrupteur actionnable par oscillation dudit bouton d'actionnement (40) par rapport à ladite base de fixation (40A).

2. Ensemble de commande modulaire (100) selon la revendication 1, dans lequel le(s)dit(s) secondes) siège(s) (17) est/sont réalisé(s) au moyen d'un cadre en saillie (17A) défini dans ladite seconde face (1B).

3. Ensemble de commande modulaire (100) selon la revendication 2, dans lequel lesdits moyens conducteurs (10) se présentent sous la forme d'une bande plate, dans lequel lesdits contacts s'étendent entre ladite première face (1A) et ladite seconde face (1B).

4. Ensemble de commande modulaire (100) selon la revendication précédente, dans lequel lesdits moyens conducteurs (10) sont définis par un circuit imprimé.

5. Ensemble de commande modulaire (100) selon l'une quelconque des revendications précédentes, dans lequel ladite unité d'actionnement (2) comprend des boutons auxiliaires (23) configurés de manière à fournir ledit signal d'actionnement en l'absence dudit module de commande (4).

6. Ensemble de commande modulaire (100) selon la revendication précédente, dans lequel ladite seconde face (1B) est configurée de manière à recouvrir ladite unité d'actionnement (2) et ladite unité d'alimentation électrique (3), ladite seconde face (1B) comprenant des ouvertures traversantes (19) configurées de manière à rendre lesdits boutons auxiliaires (23) accessibles à travers lesdites faces.

7. Ensemble de commande modulaire (100) selon l'une quelconque des revendications précédentes, dans lequel ledit cadre support (1) comprend un élément mobile (18) configuré de manière à recouvrir lesdits conducteurs (11', 12', 13', 14', 15') au niveau dudit second siège (17) dans une première position de fonctionnement et à laisser lesdits conducteurs (11', 12', 13', 14', 15') accessibles dans une seconde position de fonctionnement.

8. Ensemble de commande modulaire (100) selon la revendication précédente, dans lequel ledit cadre de support (1) comprend une pluralité de seconds sièges (17) configurés chacun de manière à loger une unité respective choisie entre ladite unité d'actionnement (2) et ladite unité d'alimentation électrique (3), ledit cadre de support (1) comprenant une pluralité d'éléments mobiles (18) configurés chacun de manière à recouvrir les conducteurs (11', 12', 13', 14', 15') d'un siège respectif de ladite pluralité de seconds sièges (17).

9. Ensemble de commande modulaire (100) selon la revendication 7 ou 8, dans lequel ledit élément mobile (18) est coulissant au niveau de ladite seconde face (1B).

10. Ensemble de commande modulaire (100) selon l'une quelconque des revendications précédentes, dans lequel ledit module de commande (4) comprend une pluralité d'éléments lumineux programmables de manière à afficher des informations relatives à ladite charge électrique et/ou à l'état de fonctionnement de ladite charge électrique.

11. Ensemble de commande modulaire (100) selon l'une quelconque des revendications précédentes, dans lequel lesdits premiers moyens de connexion (5) et/ou lesdits seconds moyens de connexion (6) comprennent des éléments élastiques (51, 61) qui peuvent être encliquetés dans des logements (52, 62) respectifs.

12. Ensemble de commande modulaire (100) selon l'une quelconque des revendications précédentes, dans lequel ledit ou lesdits sièges sont formés par un cadre en saillie défini dans ladite première face (1A).
